(19) Europäisches Patentamt
European Patent Office
Office européen des brevets

(11) **EP 3 173 194 B1**

(12) **EUROPEAN PATENT SPECIFICATION**

(45) Date of publication and mention
of the grant of the patent:
**27.03.2019 Bulletin 2019/13**

(51) Int Cl.:
***B25J 9/16*** *(2006.01)*

(21) Application number: **16201018.5**

(22) Date of filing: **29.11.2016**

(54) **MANIPULATOR SYSTEM, IMAGE CAPTURING SYSTEM, TRANSFER METHOD OF OBJECT, AND CARRIER MEDIUM**

MANIPULATORSYSTEM, BILDAUFNAHMESYSTEM, ÜBERTRAGUNGSVERFAHREN EINES OBJEKTS UND TRÄGERMEDIUM

SYSTÈME DE MANIPULATEUR, SYSTÈME DE CAPTURE D'IMAGE, PROCÉDÉ DE TRANSFERT D'OBJET ET MATÉRIEL PORTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2015 JP 2015233659**

(43) Date of publication of application:
**31.05.2017 Bulletin 2017/22**

(73) Proprietor: **Ricoh Company, Ltd.
Tokyo 143-8555 (JP)**

(72) Inventors:
• **KOBAYASHI, Takeshi
Kanagawa-Ken, Kanagawa 222-0033 (JP)**
• **HRUSCHA, Christian
Kanagawa-Ken, Kanagawa 222-0033 (JP)**
• **OGAWA, Michio
Kanagawa-ken, Kanagawa 222-0033 (JP)**

(74) Representative: **SSM Sandmair
Patentanwälte Rechtsanwalt
Partnerschaft mbB
Joseph-Wild-Straße 20
81829 München (DE)**

(56) References cited:
**EP-A1- 2 679 353    EP-A2- 2 364 823
EP-A2- 2 578 366**

## Description

BACKGROUND

Technical Field

This disclosure relates to a manipulator system, an image capturing system, a transfer method of an object, and a carrier medium.

Background Art

Assuming that a plurality of work components is piled on one place such as a tray or a container, using a manipulator system, one work component is selected from the plurality of work components piled on the one place and then moved and placed on another place. For example, the manipulator system has a manipulator that can pick up one work component from the plurality of work components piled on the one place, holds the one work component to another place, and then releases the one work component onto another place.

For example, Japanese Unexamined Patent Application Publication (Translation of PCT Application) P-2014-511772-A discloses a robot system that is used for picking objects placed on a conveyer belt. The robot system includes a robot such as a manipulator, and a camera. When the camera captures an image of the objects placed on the conveyer belt, one object is selected based on the image captured by the camera. Then, the robot (i.e., manipulator) is controlled to pick up the selected one object by using a gripper of the robot and then the robot moves and places the selected one object onto a container.

EP 2 679 353 A1 discloses a device that has a gripper (34) for gripping a workpiece, and a controller for controlling the gripper and an intermediate station (35) for placing the workpiece. The device is designed such that the workpiece is placed on the intermediate station in a defined position and/or defined alignment and re-held with a changed alignment and/or high accuracy. The gripper is designed as a mechanical, pneumatic or magnetic gripper. The intermediate station comprises a retainer (31) in which the workpiece is placed down in the defined position and/or defined alignment.

SUMMARY

In one aspect of the present invention, a manipulator system is devised. The manipulator system includes a manipulator unit to pick up one target object from a plurality of target objects placed on a first place, a recognition unit to perform a first recognition process and a second recognition process, the first recognition process recognizing the one target object to be picked up from the first place by using the manipulator unit based on three dimensional information of the plurality of target objects placed on the first place, and the second recognition process recognizing an orientation of

According to the present invention, one target object selected from a plurality of target objects randomly set on one place can be picked up by performing the first transfer operation, and the picked-up one target object can be transferred to another place by setting a given orientation based on the second transfer operation, in which the first transfer operation and the second transfer operation can be performed as one sequential operation automatically with a lower cost. Said effect is achieved by the subject-matter of the independent claims. The dependent claims are directed to embodiments of advantage.

BRIEF DESCRIPTION OF THE DRAWINGS

A more complete appreciation of the disclosure and many of the attendant advantages and features thereof can be readily obtained and understood from the following detailed description with reference to the accompanying drawings, wherein:

FIG. 1 is a perspective view of a material handling system of an example embodiment of the present invention;
FIG. 2 is a perspective view of the material handling system of FIG. 1 when an outer cover is removed;
FIG. 3 is a perspective view of a configuration of a picking robot of the material handling system of FIG. 1;
FIG. 4 is a perspective view of a hand of the picking robot viewed from a work suction unit;
FIG. 5 is a perspective view of the hand when the hand is holding a work component viewed from one direction different from FIG. 4;
FIG. 6A is a perspective view of the hand at a picking posture;
FIG. 6B is a perspective view of the hand at a transfer posture;
FIG. 7 is an example of a control block diagram of main sections of the picking robot;
FIG. 8 illustrates a schematic view of an image capturing area of a stereo camera unit of the picking robot;
FIG. 9 illustrates a schematic configuration of the principle of measuring distance by using the stereo camera unit;
FIG. 10 is a flow chart illustrating the steps of a process of controlling a transfer operation of the picking robot;
FIG. 11A is a perspective view of a connector, which is an example of work component;
FIG. 11B is a perspective view of the connector of FIG. 11A viewed from a connector pins;
FIG. 12 is a perspective view of a palette set with various work components;
FIG. 13 illustrates a schematic view of a first capturing area of a first camera of a stereo camera unit of variant example 1;

FIG. 14 illustrates a schematic view of a second capturing area of a second camera of the stereo camera unit of variant example 1; and

FIG. 15 illustrates a schematic view of an image capturing area of a single camera and a pattern projection area of a pattern projection unit of variant example 2.

The accompanying drawings are intended to depict exemplary embodiments of the present invention and should not be interpreted to limit the scope thereof. The accompanying drawings are not to be considered as drawn to scale unless explicitly noted, and identical or similar reference numerals designate identical or similar components throughout the several views.

DETAILED DESCRIPTION

A description is now given of exemplary embodiments of the present invention. It should be noted that although such terms as first, second, etc. may be used herein to describe various elements, components, regions, layers and/or sections, it should be understood that such elements, components, regions, layers and/or sections are not limited thereby because such terms are relative, that is, used only to distinguish one element, component, region, layer or section from another region, layer or section. Thus, for example, a first element, component, region, layer or section discussed below could be termed a second element, component, region, layer or section without departing from the teachings of the present invention.

In addition, it should be noted that the terminology used herein is for the purpose of describing particular embodiments only and is not intended to be limiting of the present invention. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof. Furthermore, although in describing views illustrated in the drawings, specific terminology is employed for the sake of clarity, the present disclosure is not limited to the specific terminology so selected and it is to be understood that each specific element includes all technical equivalents that operate in a similar manner and achieve a similar result. Referring now to the drawings, a description is given one or more apparatuses or systems of one example embodiment of the present invention.

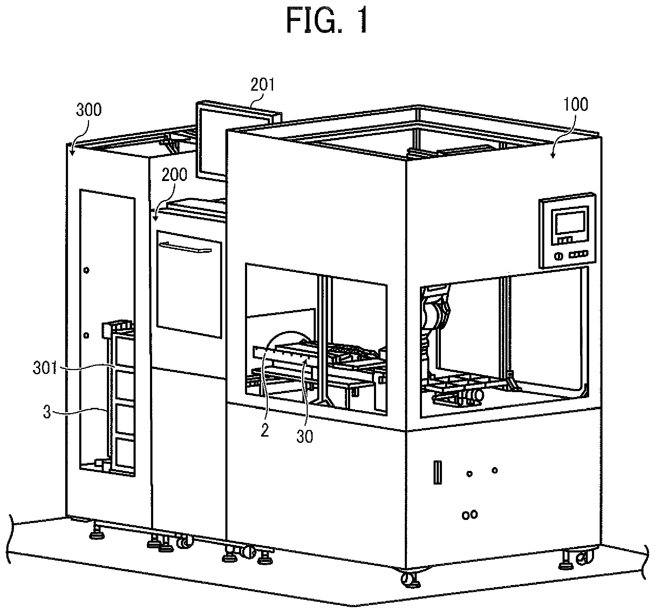

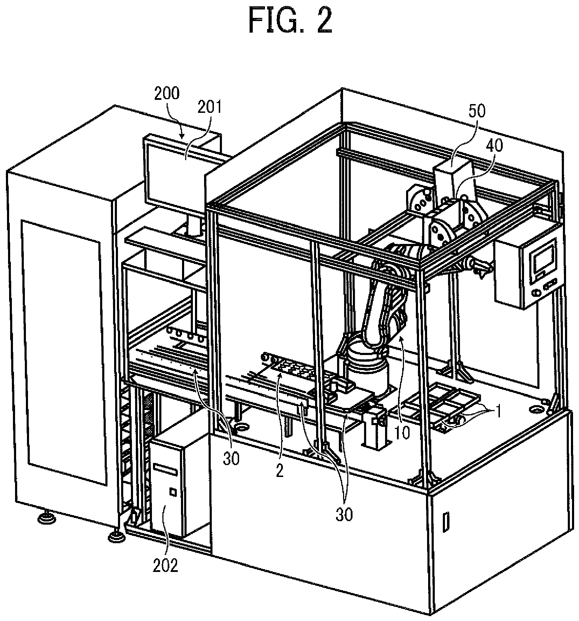

A description is given of a material handling system using a manipulator system of an example embodiment of the present invention. FIG. 1 is a perspective view of the material handling system of an example embodiment of the present invention. FIG. 2 is a perspective view of the material handling system of FIG. 1 when an outer cover is removed. The material handling system can be applied to, for example, a component inspection system as described in this specification.

As illustrated in FIG. 1, the component inspection system includes, for example, a picking robot 100, a visual inspection apparatus 200 and a magazine container unit 300. The picking robot 100 is used to pick up a work component from a first place such as a tray 1 and transfers the work component to a second place such as a palette 2. Specifically, when the tray 1 is piled with a plurality of work components, the picking robot 100 uses a manipulator unit to pick up one work component selected from the plurality of work components piled on the tray 1, and transfers the work component onto a portion of the palette 2 by setting a given orientation for the one work component, which can be performed automatically as one sequential operation. The configuration and operation of the picking robot 100, which is an example of the manipulator system of the example embodiment of the present invention, will be described in detail later.

When a given number of the work components are set on the palette 2, a palette movement mechanism 30 transports the palette 2 from the picking robot 100 to the visual inspection apparatus 200. The visual inspection apparatus 200 includes, for example, an inspection camera and a visual inspection processing unit 202. The inspection camera is an example of a visual information detection apparatus that captures an image of the work components set on the palette 2 from the upper of the palette 2. The visual inspection processing unit 202 such as a personal computer (PC) performs the visual inspection processing based on an image captured by the inspection camera. The visual inspection apparatus 200 performs the visual inspection processing. For example, the visual inspection apparatus 20 checks whether the work components are set on the palette 2 with a correction orientation, and the visual inspection apparatus 20 checks whether the work components set on the palette 2 have appearance abnormality on surfaces. When the appearance abnormality is detected by the visual inspection processing, the visual inspection processing unit 202 controls a display such as a monitor 20 to report or inform the appearance abnormality to a user (operator), in which the monitor 201 is used as an abnormality informing device. As to the example embodiment, when the abnormality of work component is detected, an image of the appearance of the detected work component is displayed on the monitor 201, with which the user can confirm that the appearance abnormality occurring on the work component by viewing the monitor 201.

When the palette 2 has passed the inspection of the visual inspection apparatus 200, or when the appearance abnormality detected on the palette 2 by the visual inspection apparatus 200 is solved, the palette movement mechanism 30 transports the palette 2 from the visual inspection apparatus 200 to the magazine container unit 300. The magazine container unit 300 includes a magazine rack 301 that can stack a plurality of magazines 3. The palette 2 transported from the visual inspection apparatus 200 is stored one by one into the magazines 3 stacked in the magazine rack 301. When the number of the magazines 3 storing the palette 2 becomes a given number, the user pulls out the stacked magazines 3 from the magazine container unit 300, and moves the magazines 3 to a later stage processing apparatus.

For example, the later stage processing apparatus is used to manufacture electronic circuit boards by disposing electronic components. In this case, the work components can be connectors, circuit parts such as inductors, capacitors, resistances, and electronic parts such as integrated circuit chips to be set on the boards. The types of work component can be changed depending on processing at the later stage processing apparatus, in which the target objects are set on the second place such as the palette 2 by setting a given orientation. Therefore, any kinds of the work component can be used as the target objects to be set on the second place such as the palette 2 by setting the given orientation

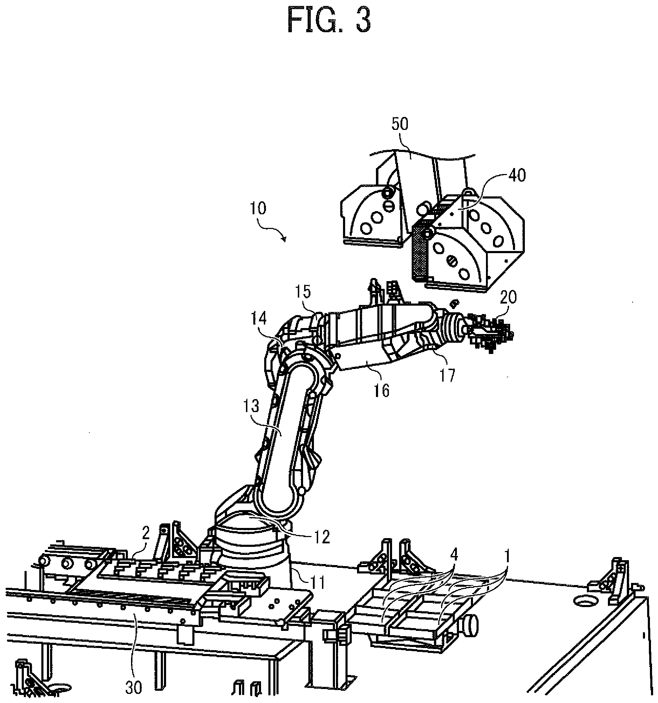

A description is given of configuration and operation of the picking robot 100 of the example embodiment. FIG. 3 is a perspective view of a configuration of the picking robot 100. The picking robot 100 includes, for example, a manipulator unit 10 having five axes, a palette movement mechanism 30, a stereo camera unit 40, and a pattern projection unit 50. The palette movement mechanism 30 transports the palette 2 to the visual inspection apparatus 200. The stereo camera unit 40, which is an image capturing unit, can be used with the robot controller 500 as a recognition unit that can perform a first recognition process and a second recognition process. When the recognition unit (i.e., stereo camera unit 40 and robot controller 500) performs the first recognition process, the recognition unit can recognize one target object to be picked up from a first place by using the manipulator unit 10 based on three dimensional information or three dimensional image information (e.g., range information such as disparity image information) of the plurality of target objects placed on the first place. When the recognition unit (i.e., stereo camera unit 40 and robot controller 500) performs the second recognition process, the recognition unit can recognize an orientation of the one target object that is picked-up by the manipulator unit 10. The pattern projection unit 50, which is a pattern image projection unit, can be used as a measurement light emission unit that emits a measurement light to an image capturing area of the stereo camera unit 40.

The image capturing unit is used to acquire image information associating a position and properties at the position (e.g., distance, optical properties) in an image capturing area of the image capturing unit. The image capturing unit can be a stereo camera that acquires range information of image associating a position in the image capturing area and range information at the position, an image acquisition unit that uses the time of flight (TOF) or the optical cutting method, or an image acquisition unit that acquires a position in the image capturing area and optical image data (e.g., brightness image, polarized image, image filtered by specific band) at the position.

The manipulator unit 10 includes, for example, a first joint 11, a second joint 12, a first arm 13, a third joint 14, a second arm 16, a fourth joint 15, a fifth joint 17, and a hand 20. The second joint 12 is attached to the first joint 11. The first joint 11 rotates about a rotation shaft extending parallel to the vertical direction. The second joint 12 rotates about a rotation shaft extending parallel to the horizontal direction. One end of the first arm 13 is attached to one end of the second joint 12. When the first joint 12 is driven, the first arm 13 rotates about the rotation shaft of the second joint 12. The other end of the first arm 13 is attached to one end of the third joint 14. The third joint 14 rotates about a rotation shaft parallel to the rotation shaft of the second joint 12. The other end of the third joint 14 is attached to one end of the fourth joint 15. The other end of the fourth joint 15 is attached to one end of the second arm 16. The fourth joint 15 rotates the second arm 16 about a rotation shaft parallel to the long side direction of the second arm 16. When the third joint 14 is driven, the second arm 16 attached to the fourth joint 15 rotates about the rotation shaft of the third joint 14. Further, when the fourth joint 15 is driven, the second arm 16 rotates about the rotation shaft of the fourth joint 15. The other end of the second arm 16 is attached to one end of the fifth joint 17. The fifth joint 17 rotates about a rotation shaft parallel to a direction perpendicular to the long side direction of the second arm 16. The hand 20 used as a holder is attached to the other end of the fifth joint 17. When the fifth joint 17 is driven, the hand 20 rotates about the rotation shaft of the fifth joint 17.

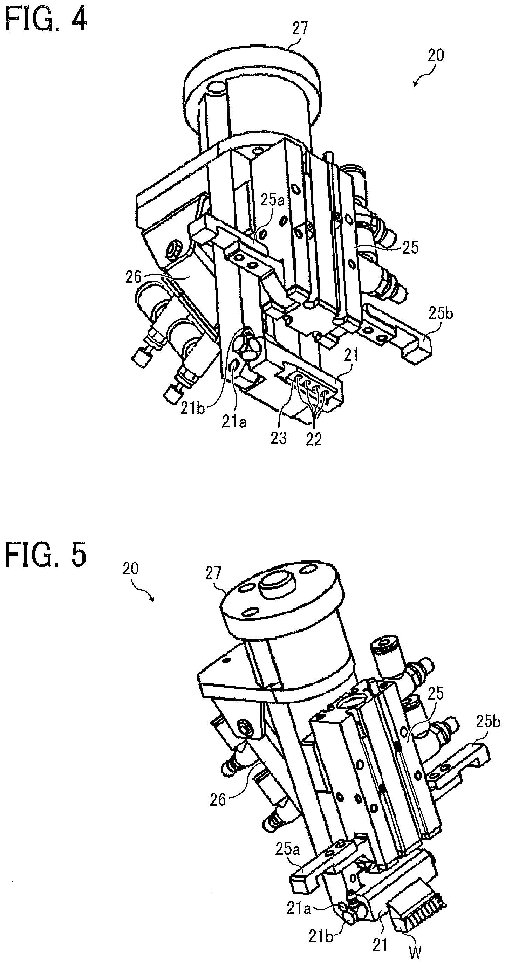

FIG. 4 is a perspective view of the hand 20 viewed from a work suction unit 21. FIG. 5 is a perspective view of the hand 20 when the hand 20 is holding a work component W viewed from one direction different from FIG. 4. The hand 20 can hold the work component W by adsorbing the work component W by using a suction air flow generated by the work suction unit 21. The hand 20 can employ any holding structure as long as the work component W can be held. For example, the hand 20 can employ a holding structure using magnetic force to adsorb the work component W, and a gripper to hold the work component W.

The hand 20 includes, for example, the work suction unit 21 that has a work adsorption face having suction holes 22 used for applying the suction air flow. An air suction route is formed inside the work suction unit 21 to pass through air between each of the suction holes 22 and a connection port 21b that is connected to the work suction pump 27. When the work suction pump 27 is driven, the suction air flow is generated in the suction holes 22, and then the hand 20 can pick up the work component W by adsorbing the work component W at the work adsorption face of the work suction unit 21. Further, when the work suction pump 27 is stopped, the work component W can be released from the work adsorption face of the work suction unit 21.

Further, a holding position of the work component W with respect to the work adsorption face of the hand 20 can be determined as follows. At first, when the work component W is picked up by the hand 20, the work component W is picked up by contacting a side face of the work component W onto a hold face 23 of the work adsorption face of the work suction unit 21, with which the holding position of the work component W with respect to the hold face 23 can be determined. Further, after holding the work component W, a work holding position adjuster 25 disposed for the hand 20 is driven to sandwich the work component W on the work adsorption face of the work suction unit 21 by using holding arms 25a and 25b, with which the holding position of the work component W with respect to the hold face 23 can be set at the center position of the work adsorption face of the work suction unit 21.

Further, if the position and posture of the work component W picked up from the work-piled tray 1 can be recognized with a higher precision when the work component W is picked up from the work-piled tray 1, the holding position of the work component W with respect to the work adsorption face of the hand 20 can be determined with a higher precision when the work component W is picked up from the work-piled tray 1, in which the adjustment unit such as the hold face 23 and the work holding position adjuster 25 that adjust the holding position of the work component W with respect to the hand 20 can be omitted.

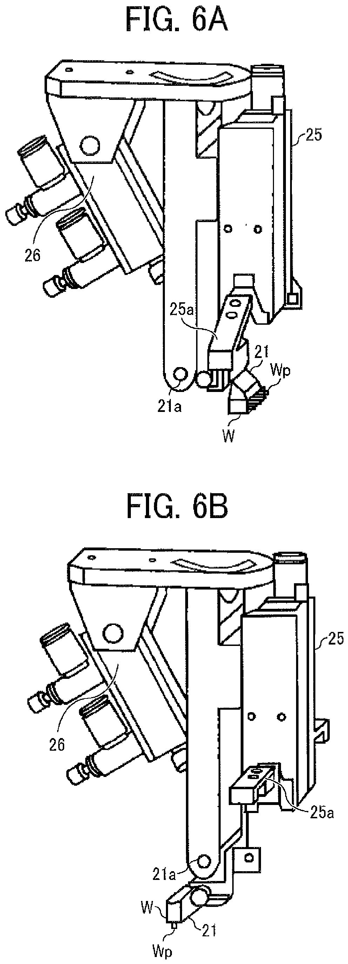

Further, the hand 20 includes a hand rotation unit 26 that can rotate the work suction unit 21 about a rotation shaft 21a of the hand 20. When the hand rotation unit 26 is driven, the posture of the work component W held by the hand 20 can be changed from a picking posture (first posture) indicated in FIG. 6A to a transfer posture (second posture) indicated in FIG. 6B.

The picking posture is a posture when the work component W is picked up and held by using the work suction unit 21 of the hand 20 by driving each of the joints 11, 12, 14, 15 and 17 of the manipulator unit 10. The transfer posture is a posture that an orientation of the work component W held by the work suction unit 21 is set to a given orientation when the hand 20 is moved at a position to set or transfer the work component W at a work receiving portion on the palette 2 by driving each of the joints 11, 12, 14, 15 and 17 of the manipulator unit 10.

Further, the posture of the work component W held by the hand 20 can be changed from the picking posture indicated in FIG. 6A to the transfer posture indicated in FIG. 6B by driving each of the joints 11, 12, 14, 15 and 17 of the manipulator unit 10 without using the hand rotation unit 26. When the above described posture change of the work component W is performed by driving each of the joints 11, 12, 14, 15 and 17 alone, the computing process to evade the interference of the manipulator unit 10 and objects around the manipulator unit 10 is required, and the control of the manipulator unit 10 becomes complex, and the time required for the movement operation of the joints becomes longer. Therefore, compared to using the hand rotation unit 26 of the hand 20, the time required for completing the posture change becomes longer. Therefore, by disposing the hand rotation unit 26 to the hand 20, the posture change from the picking posture indicated in FIG. 6A to the transfer posture indicated in FIG. 6B can be performed with a shorter time, and thereby the processing time of the system can be reduced.

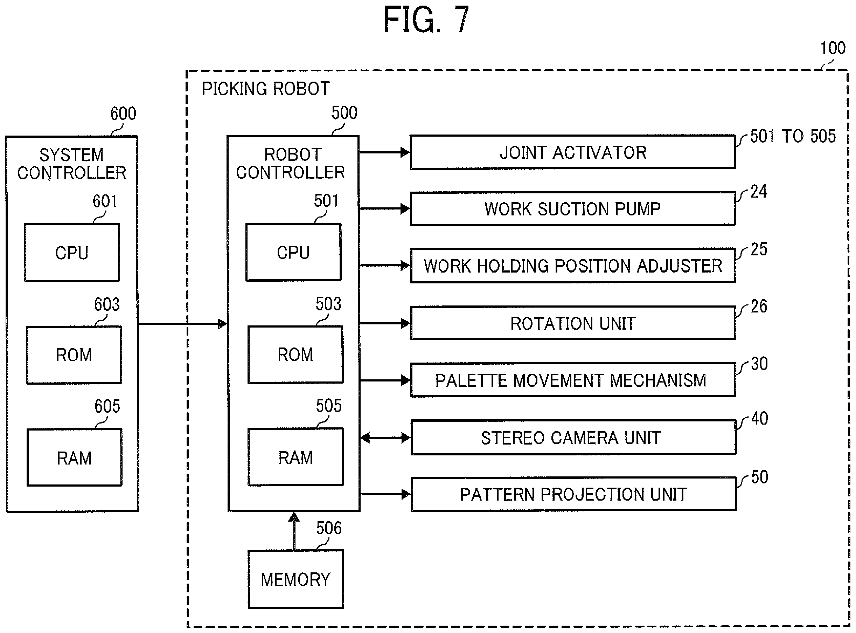

FIG. 7 is an example of a control block diagram of main sections of the picking robot 100. As illustrated in FIG. 7, the picking robot 100 includes, for example, joint actuators 501 to 505, the work suction pump 27, the work holding position adjuster 25, the hand rotation unit 26, the palette movement mechanism 30, the stereo camera unit 40, the pattern projection unit 50, a robot controller 500, and a memory 506. Further, the system controller 600 controls the component inspection system by controlling the picking robot 100. The joint actuators 501 to 505 respectively drive the joints 11, 12, 14, 15 and 17. The robot controller 500 controls the joint actuators 501 to 505, the work suction pump 27, the work holding position adjuster 25, the hand rotation unit 26, the palette movement mechanism 30, the stereo camera unit 40, and the pattern projection unit 50. Various programs executed in a computing unit of the robot controller 500 can be stored in the memory 506. The various programs include, for example, a program to control the manipulator unit 10, the stereo camera unit 40, and the pattern projection unit 50 used for the picking robot 100. The robot controller 500 includes, for example, a central processing unit (CPU) 501 as a computing unit, a read only memory (ROM) 503, and a random access memory (RAM) 505 that temporarily stores data used at the CPU 501. The system controller 600 includes, for example, a central processing unit (CPU) 601 as a computing unit, a read only memory (ROM) 603, and a random access memory (RAM) 605 that temporarily stores data used at the CPU 601. The system controller 600 controls the robot controller 500. Under the control of the system controller 600, the robot controller 500 controls various processes or operations by executing programs stored in the memory 506. Further, the hardware of the system controller 600 and the robot controller 500 are not limited these, but other hardware that can perform the similar capabilities can be employed. Each of the functions of the described embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA), and conventional circuit components arranged to perform the recited functions.

The stereo camera unit 40 and the pattern projection unit 50 are disposed at the upper portion of the work processing space inside the picking robot 100. The pattern projection unit 50 projects a pattern image onto the work-piled tray 1 disposed at the lower portion of the work processing space from the upper of the work-piled tray 1, with which the pattern image is projected on a face of the work components W piled on the tray 1. The stereo camera unit 40 captures an image of the work components W piled on the tray 1 and an intermediate tray 4 from the upper of the tray 1 and the intermediate tray 4. The intermediate tray 4 is an example of an intermediate place. The pattern projection unit 50 projects the pattern image such as a grid pattern image having a constant interval width, When the pattern image is projected on the plurality of work components W piled on the tray 1, the grid pattern image may be distorted due to the convex and concave portions of the plurality of work components W piled on the tray 1 and convex and concave portions of a surface of each of the work components W, and the stereo camera unit 40 captures an image of the grid pattern image projected on the plurality of work components W piled on the tray 1.

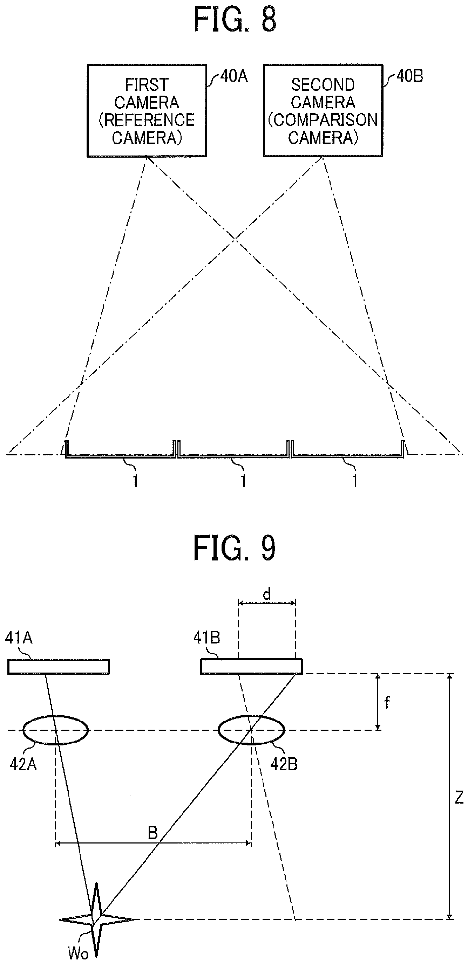

FIG. 8 illustrates a schematic view of an image capturing area of the stereo camera unit 40. The stereo camera unit 40 includes, for example, two cameras such as a first camera 40A and a second camera 40B. The first camera 40A is used as a reference camera to capture an image used as a reference image, and the second camera 40B is used as a comparison camera to capture an image used as a comparison image. The first camera 40A is an example of a first image capture and the second camera 40B is an example of a second image capture.

The first camera 40A has one image capturing area and the second camera 40B has one image capturing area as indicated in FIG. 8, and a part of the one image capturing area of the first camera 40A and a part of the one image capturing area of the second camera 40B are overlapped, and the overlapped capturing area can be used as a primary capturing area to capture images to be used for generating the three dimensional information of the plurality of target objects placed on the first place such as the tray 1. At least one of the other part of the one image capturing area of the first camera 40A or the other part of the one image capturing area of the second camera 40B, not used as the primary capturing area, can be used a secondary capturing area to capture an image to be used for generating the two dimensional information of the work component W placed on one place such as the intermediate tray 4.

The first camera 40A and the second camera 40B capture images of the plurality of work components W piled on the tray 1 from different points to acquire the reference image and the comparison image. Then, disparity information of the reference image and the comparison image can be obtained. By applying the principle of triangulation to the obtained disparity information, the range to each point on the surfaces of the plurality of work components W piled on the tray 1 is calculated, and then information of disparity image (range information of image), which is three dimensional information, having a pixel value corresponding to the range (disparity value), is generated. Based on the disparity image information acquired by using the stereo camera unit 40, three dimensional shape data of some of the work components W that can be recognized visually on the work-piled tray 1 from the above can be acquired. When the disparity image information is being acquired, the projection of the pattern image can be stopped.

FIG. 9 illustrates a schematic configuration of the principle of measuring the distance or range by using the stereo camera unit 40 having the first camera 40A and the second camera 40B. The first camera 40A and the second camera 40B respectively includes, a first image sensor 41A and a second image sensor 41B, and a first lens 42A and a second lens 42B. When the reference image is captured by the first camera 40A and the comparison image is captured by the second camera 40B, the same point "Wo" on the work component W (i.e., target object) is focused on a first point on the first image sensor 41A of the first camera 40A and on a second point on the second image sensor 41B of the second camera 40B, which are different points.

When the difference of focused points on the first image sensor 41A and the second image sensor 41B is set as "d" (i.e., disparity), the distance between the first camera 40A and the second camera 40B is set as "B," and the focal distance of the first camera 40A and the second camera 40B is set as "f," the distance "Z" from the first image sensor 41A and the second image sensor 41B to the measuring point "Wo" can be obtained by using the following formula (1). Since the "B" and "f" are pre-set values, the distance "Z" from the first image sensor 41A and the second image sensor 41B to each point on the work component W can be calculated by calculating the disparity "d" of the reference image and the comparison image.

$$Z = B \times f/d \quad (1)$$

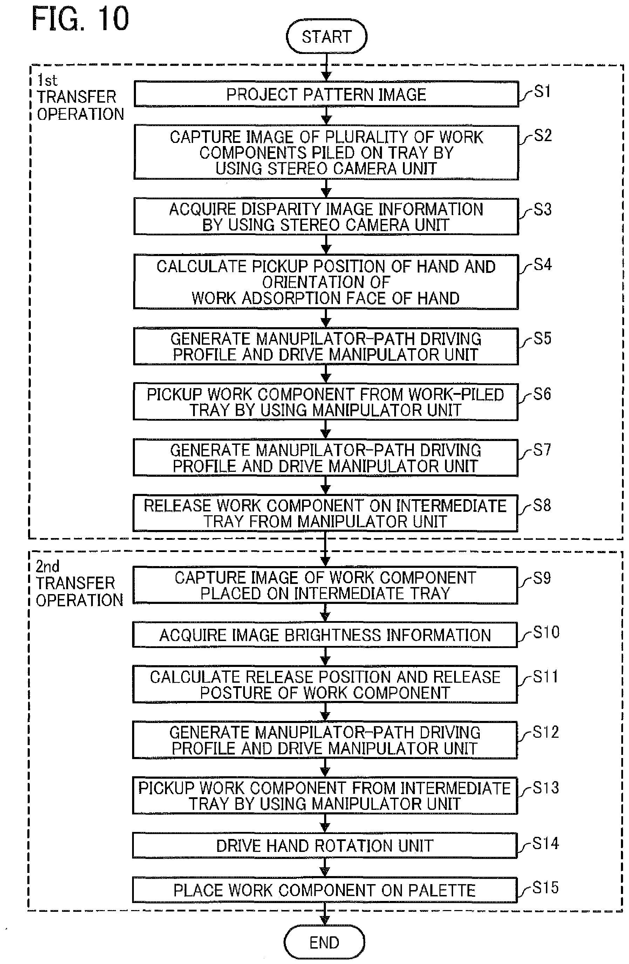

FIG. 10 is a flow chart illustrating the steps of a process of controlling a transfer operation of the picking robot 100 of the example embodiment. The transfer operation of the picking robot 100 includes, for example, a first transfer operation (or picking operation) and a second transfer operation (or placement operation). When the first transfer operation is performed, a pickup target such as one work component W is picked up from the plurality of work components W piled on the tray 1, and when the second transfer operation is performed, the picked-up work component W is set or placed on the palette 2 by setting a given orientation for the picked-up work component W.

When the system controller 600 inputs an execution command of the first transfer operation to the robot controller 500, the robot controller 500 performs the first transfer operation. At first, the robot controller 500 controls the pattern projection unit 50 to project a pattern image onto the plurality of work components W piled on the tray 1 (S1), with which the pattern image is projected on surfaces of the plurality of work components W piled on the tray 1. Then, the robot controller 500 controls the stereo camera unit 40 to capture an image of the plurality of work components W piled on the tray 1 (S2) to acquire disparity image information (or range information of image) output from the stereo camera unit 40 as three dimensional information (S3).

Then, the robot controller 500 identifies one work component W that satisfies a given pickup condition from the plurality of work components W piled on the tray 1 based on the acquired disparity image information. The robot controller 500 calculates a pickup position of the hand 20 and an orientation of the work adsorption face of the hand 20 (pickup posture) that the hand 20 can adsorb the one work component W on the work adsorption face of the hand 20 (S4).

The calculation method at step S4 can be performed as follows. For example, the three dimensional shape data (e.g., CAD data) of the work component W is stored in the memory 506 in advance, and the pattern matching is performed by comparing the three dimensional shape data of the work component W obtained from the disparity image information and the three dimensional shape data stored in the memory 506. In this method using the pattern matching, the pickup position and the pickup posture are calculated based on the position and posture of the work component W identified by the pattern matching. When the position and posture (orientation) of the plurality of work components W are identified by the pattern matching, for example, one work component W that satisfies the shortest distance condition to the stereo camera unit 40, which is at the highest position of the plurality of work components W piled on the tray 1, is identified.

Further, another calculation method not using the three dimensional shape data (e.g., CAD data) of the work component W stored in the memory 506 can be applied. Specifically, based on the disparity image information, a face area having an area size that can be adsorbed by the work adsorption face of the hand 20 is identified, and then the pickup position and the pickup posture corresponding to the identified face area can be calculated. As to the example embodiment, the face area is identified because the work component W is adsorbed on the work adsorption face to hold the work component W on the hand 20. However, depending on the holding structure, the holding portion such as a gap portion between of the work components W and the tops of the work components W may be identified as required.

When the pickup position and the pickup posture are calculated, the robot controller 500 generates a manipulator-path driving profile of the manipulator unit 10 to be used to move the hand 20 to the calculated pickup position and set the calculated pickup posture at the calculated pickup position (S5). Then, the robot controller 500 drives each of the joint actuators 501 to 505 based on the generated manipulator-path driving profile (S5), with which the hand 20 of the manipulator unit 10 is moved to a target pickup position and the hand 20 of the manipulator unit 10 is set with a target pickup posture.

When the manipulator-path driving profile is generated, the generated manipulator-path driving profile is required to be a driving profile that the manipulator unit 10 and objects existing in the work processing space do not contact or interfere with each other. Specifically, for example, the robot controller 500 refers to obstruction object information registered in the memory 506 to generate the manipulator-path driving profile so that the manipulator unit 10 can be moved along a path not contacting these objects. The obstruction object information includes information of position and shape of objects disposed in the work processing space. The objects registered as the obstruction object information may be, for example, peripherals apparatuses such as the work-piled tray 1, the intermediate tray 4, the stereo camera unit 40, and the pattern projection unit 50.

As to the information of position and shape of obstruction objects that is not registered in the memory 506 as the obstruction object information, for example, an obstruction object detection sensor to detect an obstruction object can be disposed to acquire the information of position and shape of the concerned obstruction object. The obstruction object detection sensor can employ known sensors. If the above described image capturing area of the stereo camera unit 40 can cover the work processing space entirely, the stereo camera unit 40 can be also used as the obstruction object detection sensor.

Specifically, the manipulator-path driving profile can be generated as follows. For example, at first, the shortest manipulator-path driving profile that can complete the operation with the minimum time is generated, and then it is determined whether the manipulator unit 10 to be moved by using the shortest manipulator-path driving profile will contact or interfere with one or more objects by referring the obstruction object information, in which the interference determination is performed. If it is determined that the manipulator unit 10 interferes with the one or more objects (i.e., when an error result is obtained), the robot controller 500 generates another manipulator-path driving profile, and then performs the interference determination again based on another manipulator-path driving profile, and if it is determined that the manipulator unit 10 does not interfere with the object, the robot controller 500 drives each of the joint actuators 501 to 505 based on another manipulator-path driving profile.

Further, if it is determined that the manipulator unit 10 interferes with the one or more objects, the robot controller 500 may not generate a new manipulator-path driving profile, but the robot controller 500 may read the pickup position and the pickup posture corresponding to another work component W that satisfies a another pickup condition, and then generate the manipulator-path driving profile matched to the pickup position and the pickup posture for another work component W.

When the manipulator unit 10 is driven based on the manipulator-path driving profile, and the hand 20 is set at the target pickup position with the target pickup posture, the work adsorption face of the work suction unit 21 of the hand 20 closely faces the adsorption receiving face of the work component W, which is the pickup target among the work components piled on the tray 1.

When the robot controller 500 drives the work suction pump 27 to generate the suction air flow in the suction holes 22 disposed at the work adsorption face of the work suction unit 21 when the work adsorption face of the work suction unit 21 of the hand 20 closely faces the adsorption receiving face of the work component W, the work component W is adsorbed to the work adsorption face of the work suction unit 21 with the effect of the suction air flow, and then picked up by the manipulator unit 10 (S6).

When the robot controller 500 drives the work suction pump 27, it is preferable to check the adsorption status to confirm whether the work component W is being adsorbed. When the work component W is adsorbed by using the work suction pump 27 as above described, the adsorption status can be confirmed by using, for example, signals indicating the vacuum status of an ejector. If it is determined that the adsorption is not being performed, for example, the pickup position and the pickup posture corresponding to a case that the adsorption is not performed are registered in a no-good list (NG list) stored in the memory 506, and then another manipulator-path driving profile is generated similar to the case that an error result indicating the interference is obtained.

Then, the robot controller 500 generates the manipulator-path driving profile of the manipulator unit 10 to be used to move the work component W from the above target pickup position and the target pickup posture to a given release position and a given release posture, in which the manipulator-path driving profile that can set the work component W at the given release position to release the work component W onto the work receiving portion on the intermediate tray 4 by setting the given release posture at the given release position is generated (S7). Then, the robot controller 500 drives each of the joint actuators 501 to 505 based on the manipulator-path driving profile (S7). With employing this configuration, the hand 20 of the manipulator unit 10 moves the picked-up work component W to the release position to release the picked-up work component W onto the work receiving portion of the intermediate tray 4, and the hand 20 of the manipulator unit 10 can be set to the given release posture at the given release position.

Then, the robot controller 500 stops or deactivates the work suction pump 27, with which the work component W adsorbed on the work adsorption face of the work suction unit 21 is released from the work adsorption face by the effect of the weight of the work component W, and then set or placed on the intermediate tray 4 (S8), with which the first transfer operation is completed, and then the operation mode is shifted to the second transfer operation.

As above described, the work component W picked-up from the plurality of work components W piled on the tray 1 is temporarily released on the intermediate tray 4 before setting the work component W onto a work receiving portion of the palette 2 by setting the given orientation because of the following reason.

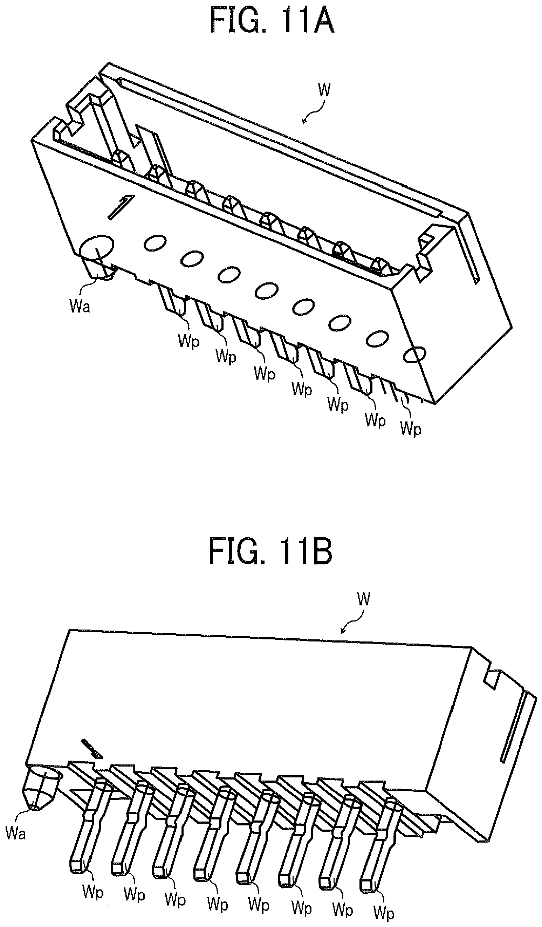

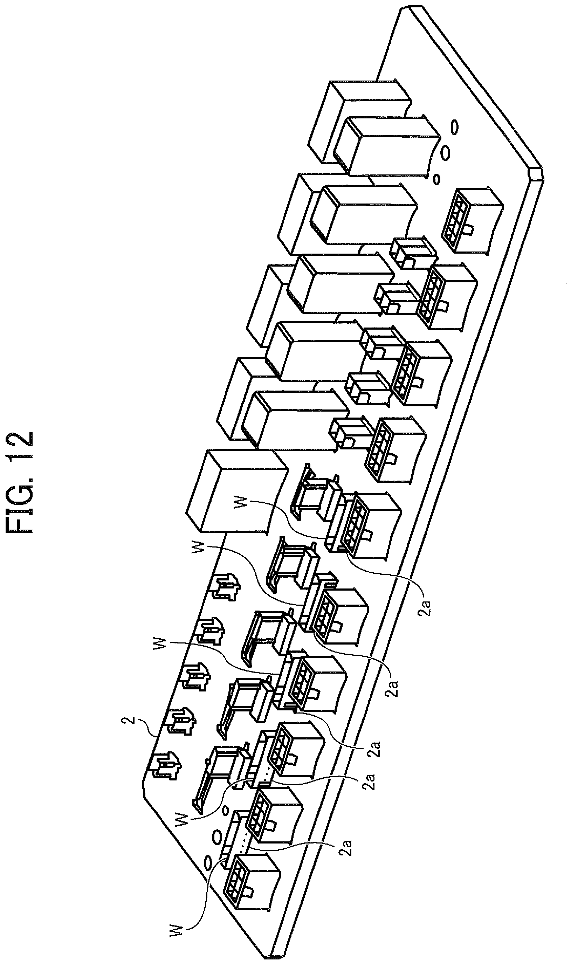

For example, the work component W may be a connector as illustrated in FIGs. 11A and 11B, and the work component W is to be fit in a reception groove 2a on the palette 2 indicated in FIG. 12, in which the reception groove 2a is used as a work receiving portion. As indicated in FIGs. 11 and 12, a plurality of connector pins Wp of the work component W is fit into the reception groove 2a by directing the connector pins Wp to the downward direction. In this case, a mark pin Wa indicating the pin arrangement direction of the connector (i.e., work component W) is required to be set at a pre-determined position in the reception groove 2a disposed on the palette 2 so the pin arrangement direction of the connector (i.e., work component W) is set to a given direction.

As above described, when the pickup target such as one work component W is identified from the plurality of work components W piled on the tray 1, the disparity image information captured by the stereo camera unit 40 is used. In this case, the position and face orientation of the adsorption receiving face of the work component W (i.e., pickup target) picked up from the plurality of work components W piled on the tray 1 can be identified with a higher precision. However, the orientation of the work component W as a whole cannot be identified with a higher precision because the plurality of work components W are stacked one to another when the stereo camera unit 40 captures an image and thereby it is difficult to distinguish one work component W from another work component W clearly.

The orientation of the work component W cannot be identified with a higher precision when the disparity image information (range information of image) is acquired by using the stereo camera unit 40, but not limited hereto. For example, the orientation of the work component W cannot be identified with a higher precision when image information that associates the position and properties at the position (e.g., distance, optical properties) is acquired by using the image capturing unit, in which when optical image data (e.g., brightness image, polarized image, image filtered by specific band) captured by a single camera while a pattern image is emitted by using a given measurement light emits is used, when the range information of image acquired by the time of flight (TOF) is used, or when the range information of image acquired by the optical cutting method is used, the orientation of the work component W cannot be identified with a higher precision.

When the orientation of the connector (i.e., work component W) is to be identified, the orientation of the connector pins Wp with respect to a connector body is required to be identified. Since the connector pins Wp are thin and thereby not to be identified easily, and one connector may be stacked on another connector, the connector pins Wp of one connector and the connector pins Wp of another connector are difficult to distinguish, and thereby it is difficult to identify the orientation of the one connector.

Therefore, as to the example embodiment, after the work component W is picked up from the work-piled tray 1 and then released on the intermediate tray 4 temporarily so that a process for identifying the orientation of the work component W is performed. Since the one work component W is placed on the intermediate tray 4 without overlapping the one work component W and another work component W, the orientation the work component W can be recognized with a higher precision based on the captured image. Therefore, even if the connector (i.e., work component W) illustrated in FIGs. 11A and 11B is the target object, the orientation of the connector pins Wp with respect to the connector body and the orientation of the mark pin Wa indicating the pin arrangement direction of the connector (i.e., work component W) can be recognized with a higher precision, and the orientation of the connector (i.e., work component W) can be identified with a higher precision.

When the picked-up work component W is released onto the work receiving portion of the intermediate tray 4, the robot controller 500 controls the stereo camera unit 40 to capture an image of the work component W placed on the intermediate tray 4 (S9). When the connector (i.e., work component W) is placed on the intermediate tray 4, the adsorption receiving face of the connector, adsorbed by the hand 20 of the manipulator unit 10, is directed to the upward. The adsorption receiving face of the connector has the largest area size of the connector body. Then, when the connector (i.e., work component W) is placed on the intermediate tray 4 by setting the adsorption receiving face to the upward direction, the connector pins Wp and the mark pin Wa are projected from the connector body into the horizontal direction. When the connector is placed on the intermediate tray 4 while the connector pins Wp and the mark pin Wa are projected from the connector body into the horizontal direction, the orientation of the connector pins Wp and the mark pin Wa with respect to the connector body can be identified without using the height information of the connector (i.e., information of range or distance from the stereo camera unit 40 to the connector). The orientation of the connector pins Wp and the mark pin Wa with respect to the connector body can be identified with a higher precision by using two dimensional information or two dimensional image information, which is optical image data, captured from the above of the connector (i.e.,

work component W).

Therefore, the two dimensional information of the connector (i.e., work component W) placed on the intermediate tray 4 is acquired, and then the orientation of the connector pins Wp and the mark pin Wa with respect to the connector body is identified based on the two dimensional information, which is optical image data. Specifically, image brightness information of the connector (i.e., work component W) placed on the intermediate tray 4 is acquired (S10). Based on the image brightness information of the connector (i.e., work component W) placed on the intermediate tray 4, the connector pins Wp and the mark pin Wa of the work component W placed on the intermediate tray 4 are identified, and then the orientation of the connector pins Wp and the mark pin Wa with respect to the connector body is identified.

The image brightness information of the work component W placed on the intermediate tray 4 can be acquired by using a specific image capturing unit. As to the example embodiment, the image brightness information of the work component W placed on the intermediate tray 4 can be acquired by using the stereo camera unit 40 because the intermediate tray 4 can be set within the image capturing area of the stereo camera unit 40. With employing this configuration, compared to disposing the specific image capturing unit, the number of parts of the system can be reduced, and the system can be manufactured with less cost.

When the stereo camera unit 40 is used to acquire the image brightness information of the work component W, the robot controller 500 controls one camera of the stereo camera unit 40 (e.g., first camera 40A) to capture an image, and then the captured image is acquired from the stereo camera unit 40. In this case, if the pattern image projected by the pattern projection unit 50 may affect the identification of the connector pins Wp and the mark pin Wa of the connector placed on the intermediate tray 4 and the identification of the orientation of the connector pins Wp and the mark pin Wa of the connector, the projection of pattern image by the pattern projection unit 50 is turned OFF.

The orientation of the work component W can be identified by using any methods such as the pattern matching. When the pattern matching is applied, computer-aided design (CAD) data or master image data of the work component W stored in the memory 506 is compared with two dimensional shape data acquired from the image brightness information captured by the stereo camera unit 40. If the three dimensional information such as the disparity image information (range information of image) captured by using the stereo camera unit 40 is used to identify the orientation of the work component W placed on the intermediate tray 4, the pattern matching is performed by comparing CAD data of the work component W stored in the memory 506 and the three dimensional shape data acquired from the disparity image information.

The process of identifying the orientation of the picked-up work component W can be performed each time the work component W is placed onto the intermediate tray 4 one by one. Further, if the plurality of work components W are placed on the intermediate tray 4 without overlapping with each other, the orientation of the work components W can be identified by capturing an image of the plurality of work components W placed on the intermediate tray 4 collectively.

Further, as to above described example embodiment, the work component W is placed on the intermediate tray 4 temporarily to identify the orientation of the picked-up work component W, but not limited hereto. For example, the orientation of the work component W can be identified while the manipulator unit 10 is holding the work component W. In this case, after the work component W is picked up from the work-piled tray 1 by using the manipulator unit 10, the stereo camera unit 40 captures an image of the work component W picked-up and being held by the manipulator unit 10, and the orientation of the work component W can be identified based on the captured image. In this case too, if the one work component W is captured by the stereo camera unit 40 without an interference of another work component W, the orientation of the work component W can be identified with a higher precision by using the captured image. Further, since the one work component W is not placed on the intermediate tray 4, the orientation of the work component W can be identified with a higher precision and a shorter time, with which the processing time of the system can be reduced.

When the orientation of the work component W placed on the intermediate tray 4 is identified, the robot controller 500 calculates the pickup position and the orientation of the work adsorption face (pickup posture) of the hand 20 to adsorb the work component W by using the work adsorption face of the hand 20, and also calculates a release position and a release posture to set the work component W picked-up from the intermediate tray 4 onto the work receiving portion of the palette 2 by setting the given orientation (S11).

Then, the robot controller 500 generates the manipulator-path driving profile of the manipulator unit 10 to be used for moving the hand 20 to the calculated release position and for setting the hand 20 with the calculated release posture at the calculated release position (S12), and the robot controller 500 drives each of the joint actuators 501 to 505 based on the manipulator-path driving profile (S12). Similar to the first transfer operation for transferring the work component W from the work-piled tray 1 to the intermediate tray 4, the robot controller 500 generates the manipulator-path driving profile used for the second transfer operation for transferring the work component W from the intermediate tray 4 to the palette 2 after performing the interference determination.

When the connector (i.e., work component W) is placed on the intermediate tray 4, and then the connector is picked up and moved by the manipulator unit 10 to set the connector on the work receiving portion of the palette 2 by setting the given orientation to the connector, the manipulator unit 10 may be required to be moved greatly depending on the orientation of the connector pins Wp and the mark pin Wa and/or the face direction (e.g., front, rear) of the connector. In this case, the driving time of each of the joints 11, 12, 14, 15 and 17 becomes greater, and the time required for the movement operation of the joints becomes longer, with which the generation of the manipulator-path driving profile to evade the interference with one or more objects existing around the manipulator unit 10 may become a complex process.

As to the above described example embodiment, the hand 20 includes the hand rotation unit 26. Therefore, the posture change from the picking posture indicated in FIG. 6A to the transfer posture indicated in FIG. 6B can be performed with a shorter time, Therefore, for example, when the driving time of each of the joints 11, 12, 14, 15 and 17 becomes a given level or more and/or the error result is obtained for the interference determination when generating the manipulator-path driving profile, the robot controller 500 drives the hand rotation unit 26 to change the posture of the hand 20 from the picking posture to the transfer posture, and then generates the manipulator-path driving profile again after changing the posture of the hand 20. With employing this configuration, the manipulator-path driving profile that does not move the manipulator unit 10 greatly can be generated, and the work component W can be set on the palette 2 with a shorter time, which means the driving time of each of the joints of the manipulator unit 10 can be reduced, and the one target object set with the given orientation can be transferred to the second place with a shorter time.

When each of the joint actuators 501 to 505 is driven based on the generated manipulator-path driving profile, the hand 20 is moved to the given pickup position with given the pickup posture, and then the work adsorption face of the work suction unit 21 of the hand 20 closely faces the adsorption receiving face of the work component W placed on the intermediate tray 4.

When the robot controller 500 drives the work suction pump 27 while the work adsorption face of the work suction unit 21 of the hand 20 closely faces the adsorption receiving face of the work component W placed on the intermediate tray 4, the suction air flow is generated to the suction holes 22 disposed on the work adsorption face of the work suction unit 21. Then, the work component W is adsorbed to the work adsorption face of the work suction unit 21 by the effect of suction air flow, and then the work component W is picked up by the manipulator unit 10 (S13).

When the robot controller 500 drives each of the joint actuators 501 to 505 based on the manipulator-path driving profile, the hand 20 of the manipulator unit 10 is moved to the release position to set the work component W picked up from the intermediate tray 4 onto the work receiving portion of the palette 2, and the hand 20 of the manipulator unit 10 is set with the given release posture at the release position. In this case, the robot controller 500 drives the hand rotation unit 26 between a time point when the manipulator unit 10 picks up the work component W from the intermediate tray 4 and a time point when the hand 20 is set at the release position (S14).

When the hand 20 of the manipulator unit 10 is moved and set at the release position with the given release posture, the connector (i.e., work component W) held by the hand 20 of the manipulator unit 10 is fit into the reception groove 2a on the palette 2 from the above by setting the connector pins Wp downward and setting the mark pin Wa at a position corresponding to the reception groove 2a of the palette 2. When the robot controller 500 deactivates or stops the work suction pump 27 when the connector (i.e., work component W) is held by the hand 20 of the manipulator unit 10 while the hand 20 is set at the release position with the given release posture, the work component W adsorbed on the work adsorption face of the work suction unit 21 is released from the work adsorption face of the work suction unit 21 by the effect of the weight of the connector (i.e., work component W), and then set into the reception groove 2a of the palette 2 with the given orientation (S15).

As to the above described example embodiment, the first transfer operation to pick up the pickup target such one work component W from the plurality of work components W piled on the tray 1, and the second transfer operation to set or transfer the picked-up work component W on the palette 2 by setting the given orientation can be performed by using the same manipulator unit 10, in which the manipulator unit 10 is used as a common manipulator unit for the first transfer operation and the second transfer operation. Therefore, compared to a configuration that uses at least one manipulator unit to perform the first transfer operation and another at least one manipulator unit to perform the second transfer operation, the number of parts of the manipulator system can be reduced, and the manipulator system can be manufactured with less cost for the above described example embodiment. Typically, the cost of parts of the manipulator unit 10 is relatively greater than the cost of other parts of the manipulator system, the cost of the manipulator system can be reduced greatly by using the same manipulator unit 10 as above described. Further, as to the above described example embodiment, since the image capturing unit used for the first transfer operation and the image capturing unit used for the second transfer operation is the same image capturing unit such as the stereo camera unit 40, the number of parts of the system can be further reduced, and the manipulator system can be manufactured with lesser cost.

(Variant example 1)

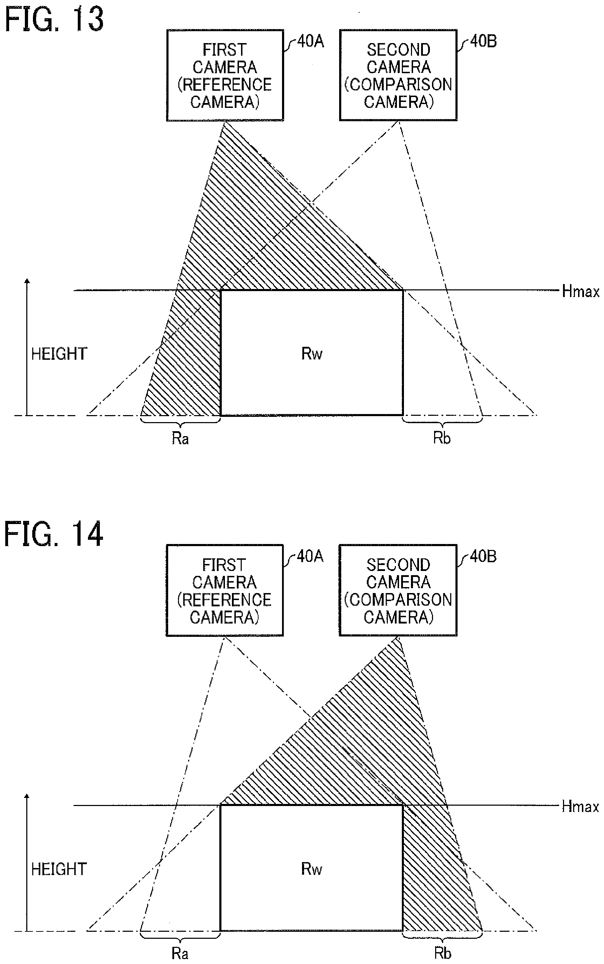

A description is given of the picking robot 100 of a variant example 1 of the above described example embodiment. FIG. 13 illustrates a schematic view of a first capturing area of the first camera 40A of the stereo camera unit 40. FIG. 14 illustrates a schematic view of a second capturing area of the second camera 40B of the stereo camera unit 40. As to the above described the picking robot 100, an image capturing area that can acquire effective disparity image information by using the stereo camera unit 40 corresponds to an overlapping area of the first capturing area of the first camera 40A (see FIG. 13) and the second capturing area of the second camera 40B (see FIG. 14).

As to the above described picking robot 100, the total height of the plurality of work components W piled on the tray 1 is limited to a given height or less, which can be a pre-set value. The given height is referred to as the upper limit "Hmax" in this description. Therefore, an overlapping area of the first capturing area of the first camera 40A and the second capturing area of the second camera 40B that is defined by including the condition of the upper limit "Hmax" becomes an overlapped effective capturing area Rw as indicated in FIGs. 13 and 14.

The effective disparity image information can be acquired by using the stereo camera unit 40 when the target object is set within the overlapped effective capturing area Rw. Therefore, when the first transfer operation is performed by identifying the pickup target such as one work component from the plurality of work components piled on the tray 1 by using the disparity image information, the plurality of work components piled on the tray 1 is required to be set within the overlapped effective capturing area Rw. The overlapped effective capturing area Rw can be used as a primary capturing area to capture images to be used for generating the three dimensional information of the plurality of target objects placed on the first place.

As to the above described picking robot 100, when the second transfer operation is performed by identifying the orientation of the work component W placed on the intermediate tray 4, the image brightness information acquired by using the first camera 40A of the stereo camera unit 40 is used without using the disparity image information obtained by using the stereo camera unit 40.

Since the image brightness information can be acquired effectively from the first capturing area of the first camera 40A, the overlapped effective capturing area Rw where the first capturing area of the first camera 40A overlaps with the second capturing area of the second camera 40B may not be used to acquire the image brightness information although the overlapped effective capturing area Rw in the first capturing area of the first camera 40A can be used to acquire the image brightness information. Therefore, the image brightness information can be acquired effectively from a part of the first capturing area of the first camera 40A, which is indicated as a first camera effective capturing area or a reference camera effective capturing area Ra in FIG. 13.

Therefore, as to the variant example 1, for example, the plurality of work components piled on the tray 1 are set in the overlapped effective capturing area Rw of the stereo camera unit 40 while the work component placed on the intermediate tray 4 is set in the reference camera effective capturing area Ra of the stereo camera unit 40. Therefore, when the first transfer operation is performed, the robot controller 500 controls the manipulator unit 10 to release the work component W picked up from the work-piled tray 1 on the intermediate tray 4 set in the reference camera effective capturing area Ra in the first capturing area of the first camera 40A, in which the reference camera effective capturing area Ra is outside of the overlapped effective capturing area Rw.

With employing this configuration, the work-piled tray 1 can be set in the entire of the overlapped effective capturing area Rw of the stereo camera unit 40, with which the occupying space of the tray 1 can be secured in the overlapped effective capturing area Rw while the occupying space of the intermediate tray 4 can be secured in the reference camera effective capturing area Ra when the same image capturing unit is used for the first transfer operation and the second transfer operation.

Further, as to the variant example 1, the image brightness information acquired by using the first camera 40A is used when the second transfer operation is performed by identifying the orientation of the work component W placed on the intermediate tray 4, but the image brightness information acquired by using the second camera 40B can be used instead of the image brightness information acquired by using the first camera 40A, in which the work component placed on the intermediate tray 4 is set in a second camera effective capturing area or a comparative camera effective capturing area Rb indicated in FIG. 14. Further, the work component W placed on the intermediate tray 4 can be set in the reference camera effective capturing area Ra (see FIG. 13) and the comparative camera effective capturing area Rb (see FIG. 14). At least one of the reference camera effective capturing area Ra (see FIG. 13) and the comparative camera effective capturing area Rb (see FIG. 14) can be used as a secondary capturing area to capture an image to be used for generating the two dimensional information.

(Variant example 2)

A description is given of the picking robot 100 of a variant example 2 of the above described example embodiment. As to the variant example 2, a single camera 40S is used instead of the stereo camera unit 40, in which the three dimensional information is acquired based on an image captured by the single camera 40S when the pattern projection unit 50 projects the pattern image. As to the variant example 2, the single camera 40S and the measurement light emission unit 50 that emits a measurement light are collectively used to acquire the three dimensional information in the image capturing area of the single camera 40S. Further, the measurement light is used to acquire the three dimensional information in the image capturing area, and to enhance the acquiring precision of the three dimensional information in the image capturing area.

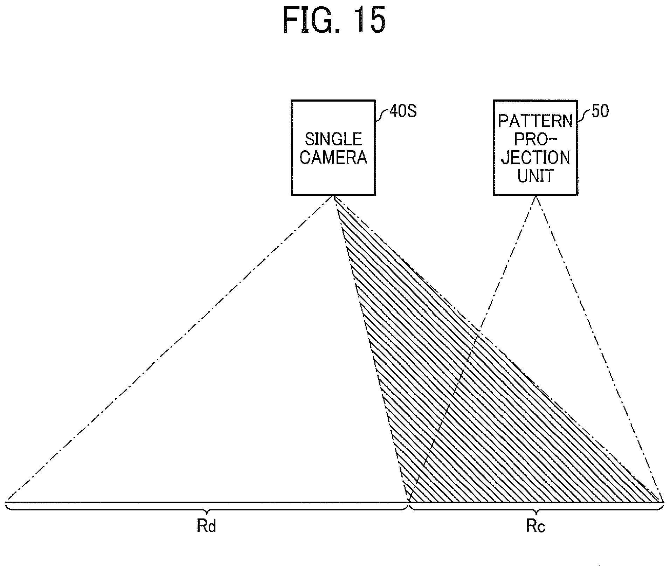

FIG. 15 illustrates a schematic view of the image capturing area of the single camera 40S and the pattern projection area of the pattern projection unit 50 of the variant example 2. As to the variant example 2, an overlapping area of the image capturing area of the single camera 40S and the pattern projection area of the pattern projection unit 50 is referred to as an overlapping area or a pattern projection area Rc as indicated in FIG. 15. The pattern projection area Rc can be used as an image capturing area that can acquire effective three dimensional information based on an image captured by the single camera 40S. When the target object is set within the pattern projection area Rc, the effective three dimensional information can be acquired based on an image captured by the single camera 40S. Therefore, as to the variant example 2, when the first transfer operation is performed by identifying the pickup target such as one work component from the plurality of work components piled on the tray 1, the plurality of work components piled on the tray 1 is set within the pattern projection area Rc. The pattern projection area Rc can be used as a primary capturing area to capture an image to be used for generating the three dimensional information of the plurality of target objects placed on the first place.

Further, when the second transfer operation is performed by identifying the orientation of the work component W placed on the intermediate tray 4, the two dimensional information such as image brightness information acquired by using the single camera 40S is used instead of the three dimensional information similar to the above described example embodiment. When the image brightness information is acquired by using the single camera 40S, the projection of the pattern image by the pattern projection unit 50 is not required. Further, in some cases, the effective image brightness information can be acquired when the projection of the pattern image by the pattern projection unit 50 is not performed.

Therefore, as to the variant example 2, the intermediate tray 4 placed with the work component is set in a pattern-not-projected area Rd in the image capturing area of the single camera 40S where the pattern image by the pattern projection unit 50 is not projected. The pattern-not-projected area Rd can be used as a secondary capturing area to capture an image to be used for generating the two dimensional information. Therefore, when the first transfer operation is performed, the robot controller 500 controls the manipulator unit 10 to pick up the work component W from the work-piled tray 1, and then releases the work component W picked-up from the work-piled tray 1 onto the intermediate tray 4 set in the pattern-not-projected area Rd in the image capturing area of the single camera 40S. With employing this configuration, the work-piled tray 1 can be set in the entire of the pattern projection area Rc of the image capturing area of the single camera 40S, with which the occupying space of the tray 1 can be secured in the pattern projection area Rc while the occupying space of the intermediate tray 4 can be secured in the pattern-not-projected area Rd when the same image capturing unit is used for the first transfer operation and the second transfer operation.

As to the above described aspects of the present invention, one target object selected from a plurality of target objects randomly set on one place can be picked up by performing the first transfer operation, and the picked-up one target object can be transferred to another place by setting a given orientation based on the second transfer operation, in which the first transfer operation and the second transfer operation can be performed as one sequential operation automatically with a lower cost.

The present invention can be implemented in any convenient form, for example using dedicated hardware, or a mixture of dedicated hardware and software. The present invention may be implemented as computer software implemented by one or more networked processing apparatuses. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

Numerous additional modifications and variations for the communication terminal, information processing system, and information processing method, a program to execute the information processing method by a computer, and a storage or carrier medium of the program are possible in light of the above teachings. It is therefore to be understood that within the scope of the appended claims, the disclosure of the present invention may be practiced otherwise than as specifically described herein. For example, elements and/or features of different examples and illustrative embodiments may be combined each other and/or substituted for each other within the scope of this disclosure and appended claims.

## Claims

1. A manipulator system comprising:

a manipulator unit (10) to pick up one target object from a plurality of target objects placed on a first place;

a stereo camera unit (40), which is an image capturing unit (40) and can be used together with a robot controller (500) as a recognition unit (40, 500) to perform a first recognition process and a second recognition process, the first recognition process recognizing the one target object to be picked up from the first place by using the manipulator unit (10) based on three dimensional information of the plurality of target objects placed on the first place, and the second recognition process recognizing an orientation of the one target object picked up from the first place by the manipulator unit (10) based on two dimensional information of the picked-up one target object; and

a controller (500, 600) to control the manipulator unit (10) to perform a first transfer operation based on the first recognition process, and a second transfer operation based on the second recognition process for the one target object,

wherein when the controller (500, 600) performs the first transfer operation, the controller (600) instructs the manipulator unit (10) to pick up the one target object recognized by the first recognition process and to move the picked-up one target to an outside of the first place,

wherein when the controller (500, 600) performs the second transfer operation, the controller (500, 600) instructs the manipulator unit (10) to transfer the one target object, already moved to the outside of the first place by using the manipulator unit (10), to a second place by setting the orientation of the one target object with an orientation determined based on a recognition result of the second recognition process,

**characterized by**

the image capturing unit (40) having a first camera (40A) to capture a reference image and having a second camera (40B) to capture a comparison image of the plurality of target objects placed on the first place, whereby the first camera (40A) has one image capturing area and the second camera (40B) has one image capturing area, and a part of the one image capturing area of the first camera (40A) and a part of the one image capturing area of the second camera (40B) are overlapped, and the overlapped capturing area can be used as a primary capturing area to capture images to be used for generating the three dimensional information of the plurality of target objects placed on a first place and whereby at least one of the other part of the one image capturing area of the first camera (40A) or the other part of the one image capturing area of the second camera (40B), not used as the primary capturing area, can be used as a secondary capturing area to capture an image to be used for generating the two dimensional information of the picked-up one target object,

wherein the three dimensional information to be used in the first recognition process includes disparity information generated from the reference image and the comparison image captured by the image capturing unit (40), and

wherein the two dimensional information to be used in the second recognition process includes image brightness information generated from the one image captured by the image capturing unit (40).

2. The manipulator system of claim 1, wherein the image capturing unit (40) includes a first image capturer (40A) having a first image capturing area, and a second image capturer (40B) having a second image capturing area,

wherein the first image capturer (40A) captures the one image of the one target object that is picked up by the manipulator unit (10) and set in a part of the first image capturing area, or the second image capturer (40B) captures the one image of the one target object that is picked up by the manipulator unit (10) and set in a part of the second image capturing area,

wherein the controller (500, 600) instructs the manipulator unit (10) to move and set the one target object picked up by the manipulator unit (10) to a place set in the part of the first image capturing area when the one image of the one target object is captured by using the first image capture (40A),

wherein the controller (500, 600) instructs the manipulator unit (10) to move and set the one target object picked up by the manipulator unit (10) to a place set in the part of the second image capturing area when the one image of the one target object is captured by using the second image capturer (40B).

3. The manipulator system of claim 2, wherein the recognition unit (40, 500) recognizes the orientation of the one target object picked up by the manipulator unit (10) based on the one image captured by the first image capturer (40A) of the image capturing unit (40), or the recognition unit (40, 500) recognizes the orientation of the one target object picked up by the manipulator unit (10) based on the one image captured by the second image capturer (40B) of the image capturing unit (40).

4. The manipulator system of claim 1, further comprising:

    a measurement light emission unit (50) to emit a measurement light to the plurality of target objects placed on the first place,

    wherein the controller (500, 600) performs the first transfer operation to move and set the one target object picked up by the manipulator unit (10) to a place that is not irradiated by the measurement light emitted from the measurement light emission unit (50) to capture the one image used for the second recognition process without an effect of the measurement light emitted from the measurement light emission unit (50).

5. The manipulator system of any one of claims 1 to 4, wherein when the first transfer operation is performed, the controller (500, 600) instructs the manipulator unit (10) to place the one target object picked and held by the manipulator unit (10) on an intermediate place (4) set outside the first place, and the second recognition process recognizes the orientation of the one target object placed on the intermediate place (4), and

wherein when the second transfer operation is performed, the controller (500, 600) instructs the manipulator unit (10) to pick up the one target object placed on the intermediate place (4) and transfer the one target object to the second place.

6. The the manipulator system of any one of claims 1 to 4,

wherein the recognition unit performs the second recognition process to recognize the orientation of the one target object while the manipulator unit (10) is holding the one target object, and then the controller (500, 600) instructs the manipulator unit (10) to transfer the one target object being held by the manipulator unit (10) to the second place directly.

7. The manipulator system of any one of claims 1 to 6, wherein the manipulator unit (10) includes:

    one or more joints (11, 12, 14, 15, 17);
    one or more actuators (501 to 505) to respectively drive the one or more joints (11, 12, 14, 15, 17);
    one or more arms (13, 16) respectively attached to the one or more joints (11, 12, 14, 15, 17);
    a holder (20), attached to one of the one or more arms (13, 16) or one of the one or more joints (11, 12, 14, 15, 17), to hold the one target object; and
    a rotation unit (26) to rotate the holder (20),
    wherein the rotation unit (26) rotates the holder (20) holding the one target object to change a posture of the one target object held by the holder (20) so that the orientation of the one target object is set with the given orientation when the one target object held by the holder (20) is moved to a transfer position on the second place by driving the one or more joints (11, 12, 14, 15, 17).

8. A method of transferring one target object from a first place to a second place, comprising;
   acquiring three dimensional information of a plurality of target objects placed on the first place;
   a first recognition process of recognizing the one target object to be picked up from the plurality of target objects placed on the first place based on the acquired three dimensional information;
   by using a manipulator unit (10), picking the one target object, recognized at the recognizing step, from the plurality of target objects placed on the first place to move the one target object outside the first place;
   a second recognition process of recognizing an orientation of the one target object picked up and moved to the outside the first place at the picking step; and
   by using the manipulator unit (10) used at the picking step, transferring the one target object having the orientation recognized at the recognizing step to the second place by setting a given orientation for the one target object,
   **characterized by**
   capturing a reference image by a first camera (40A) and capturing a comparison image by a second camera (40B), of the plurality of target objects placed on the first place, the first camera (40A) and the second camera (40B) comprising an image capturing unit (40), whereby the first camera (40A) has one image capturing area and the second camera (40B) has one image capturing area, and a part of the one image capturing area of the first camera (40A) and a part of the one image capturing area of the second camera (40B) are overlapped, and the overlapped capturing area can be used as a primary capturing area to capture images to be used for generating the three dimensional information of the plurality of target objects placed on a first place and whereby at least one of the other part of the one image capturing area of the first camera (40A) or the other part of the one image capturing area of the second camera (40B), not used as the primary capturing area, can be used a secondary capturing area to capture an image to be used for generating the two dimensional information of the picked-up one target object,
   wherein the three dimensional information to be used in the first recognition process includes disparity information generated from the reference image and the comparison image captured by the image capturing unit (40), and
   wherein the two dimensional information to be used in the second recognition process includes image brightness information generated from the one image captured by the image capturing unit (40).

9. A carrier medium storing a program that, when executed by a computer, causes the computer to execute the method of claim 8.

**Patentansprüche**

1. Manipulatorsystem, das Folgendes umfasst:
   eine Manipulatoreinheit (10), um ein Zielobjekt von mehreren Zielobjekten, die an einem ersten Ort angeordnet sind, aufzunehmen;
   eine Stereokameraeinheit (40), die eine Bildaufnahmeeinheit (40) ist und zusammen mit einer Robotersteuereinheit (500) als eine Erkennungseinheit (40, 500) verwendet werden kann, um einen ersten Erkennungsprozess und einen zweiten Erkennungsprozess auszuführen, wobei der erste Erkennungsprozess das eine Zielobjekt, das von dem ersten Ort durch Verwenden der Manipulatoreinheit (10) aufzunehmen ist, anhand von dreidimensionalen Informationen der mehreren Zielobjekte, die an dem ersten Ort angeordnet sind, erkennt und der zweite Erkennungsprozess eine Ausrichtung des einen Zielobjekts, das von dem ersten Ort durch die Manipulatoreinheit (10) aufgenommen wurde, anhand von zweidimensionalen Informationen des aufgenommenen einen Zielobjekts erkennt; und
   eine Steuereinheit (500, 600), um die Manipulatoreinheit (10) zu steuern, einen ersten Übertragungsvorgang anhand des ersten Erkennungsprozesses auszuführen und einen zweiten Übertragungsvorgang anhand des zweiten Erkennungsprozesses für das eine Zielobjekt auszuführen,
   wobei dann, wenn die Steuereinheit (500, 600) den ersten Übertragungsvorgang ausführt, die Steuereinheit (600) die Manipulatoreinheit (10) anweist, das eine Zielobjekt, das durch den ersten Erkennungsprozess erkannt wurde, aufzunehmen und das aufgenommene eine Ziel zu einer Außenseite des ersten Orts zu bewegen,
   wobei dann, wenn die Steuereinheit (500, 600) den zweiten Übertragungsvorgang ausführt, die Steuereinheit (500, 600) die Manipulatoreinheit (10) anweist, das eine Zielobjekt, das bereits zu einer Außenseite des ersten Orts durch Verwenden der Manipulatoreinheit (10) bewegt wurde, durch Einstellen der Ausrichtung des einen Zielobjekts mit einer Ausrichtung, die anhand eines Erkennungsergebnisses des zweiten Erkennungsprozesses bestimmt wird, zu einem zweiten Ort zu bewegen,
   **dadurch gekennzeichnet, dass**
   die Bildaufnahmeeinheit (40) eine erste Kamera (40A) besitzt, um ein Referenzbild aufzunehmen, und eine zweite Kamera (40B) besitzt, um ein Vergleichsbild der mehreren Zielobjekte, die an dem ersten Ort positioniert sind, aufzunehmen, wobei die erste Kamera (40A) einen Bildaufnahmebereich besitzt und die zweite Kamera (40B) einen Bildaufnahmebereich besitzt und sich ein Teil des einen Bildaufnahmebereichs der ersten Kamera (40A) und ein Teil des einen Bildaufnahmebereichs der zweiten Kamera (40B) überschneiden und der sich überschneidende Aufnahmebereich als ein primärer Aufnahmebereich verwendet werden kann, um Bilder aufzunehmen, die zum Erzeugen der dreidimensionalen Informationen der mehreren Zielobjekte, die an einem ersten Ort angeordnet sind, zu erzeugen, und wobei mindestens einer des anderen Teils des einen Bildaufnahmebereichs der ersten Kamera (40A) und des anderen Teils des einen Bildaufnahmebereichs der zweiten Kamera (40B), die nicht als der primäre Aufnahmebereich verwendet werden, als ein sekundärer Aufnahmebereich verwendet werden kann, um ein Bild aufzunehmen, das zum Erzeugen der zweidimensionalen Informationen des aufgenommenen einen Zielobjekts verwendet werden kann,
wobei die dreidimensionalen Informationen, die in dem ersten Erkennungsprozess zu verwenden sind, Disparitätsinformationen enthalten, die aus dem Referenzbild und dem Vergleichsbild, die durch die Bildaufnahmeeinheit (40) aufgenommen wurden, erzeugt werden, und
wobei die zweidimensionalen Informationen, die in dem zweiten Erkennungsprozess zu verwenden sind, Bildhelligkeitsinformationen enthalten, die aus dem einen durch die Bildaufnahmeeinheit (40) aufgenommenen Bild erzeugt werden.

2. Manipulatorsystem nach Anspruch 1, wobei die Bildaufnahmeeinheit (40) eine erste Bildaufnahmeeinrichtung (40A) mit einem ersten Bildaufnahmebereich und eine zweite Bildaufnahmeeinrichtung (40B) mit einem zweiten Bildaufnahmebereich enthält,
wobei die erste Bildaufnahmeeinrichtung (40A) ein Bild des einen Zielobjekts aufnimmt, das durch die Manipulatoreinheit (10) aufgenommen wird und in einen Teil des ersten Bildaufnahmebereichs gesetzt wird, oder die zweite Bildaufnahmeeinrichtung (40B) das eine Bild des einen Zielobjekts aufnimmt, das durch die Manipulatoreinheit (10) aufgenommen wird und in einen Teil des zweiten Bildaufnahmebereichs gesetzt wird,
wobei die Steuereinheit (500, 600) die Manipulatoreinheit (10) anweist, das eine durch die Manipulatoreinheit (10) aufgenommene Zielobjekt zu einem Ort, der in dem Teil des ersten Bildaufnahmebereichs angeordnet ist, zu bewegen und dorthin zu setzen, wenn das eine Bild des einen Zielobjekts durch Verwenden der ersten Bildaufnahmeeinrichtung (40A) aufgenommen wird,
wobei die Steuereinheit (500, 600) die Manipulatoreinheit (10) anweist, das eine durch die Manipulatoreinheit (10) aufgenommene Zielobjekt zu einem Ort, der in dem Teil des zweiten Bildaufnahmebereichs angeordnet ist, zu bewegen und dorthin zu setzen, wenn das eine Bild des einen Zielobjekts durch Verwenden der zweiten Bildaufnahmeeinrichtung (40B) aufgenommen wird.

3. Manipulatorsystem nach Anspruch 2, wobei die Erkennungseinheit (40, 500) die Ausrichtung des einen durch die Manipulatoreinheit (10) aufgenommenen Zielobjekts anhand des einen durch die erste Bildaufnahmeeinrichtung (40A) der Bildaufnahmeeinheit (40) aufgenommenen Bilds erkennt oder die Erkennungseinheit (40, 500) die Ausrichtung des einen durch die Manipulatoreinheit (10) aufgenommenen Zielobjekts anhand des einen durch die zweite Bildaufnahmeeinrichtung (40B) der Bildaufnahmeeinheit (40) aufgenommenen Bilds erkennt.

4. Manipulatorsystem nach Anspruch 1, das ferner Folgendes umfasst:

eine Messlichtemissionseinheit (50), um ein Messlicht zu den mehreren Zielobjekten, die an dem ersten Ort angeordnet sind, auszusenden, wobei die Steuereinheit (500, 600) den ersten Übertragungsvorgang ausführt, um das eine durch die Manipulatoreinheit (10) aufgenommene Zielobjekt zu einem Ort, der nicht durch das von der Messlichtemissionseinheit (50) ausgesendete Messlicht bestrahlt wird, zu bewegen und dorthin zu setzen, um das eine Bild, das für den zweiten Erkennungsprozess verwendet wird, ohne eine Auswirkung des von der Messlichtemissionseinheit (50) ausgesendeten Messlichts aufzunehmen.

5. Manipulatorsystem nach einem der Ansprüche 1 bis 4,
wobei dann, wenn der erste Übertragungsvorgang ausgeführt wird, die Steuereinheit (500, 600) die Manipulatoreinheit (10) anweist, das eine durch die Manipulatoreinheit (10) aufgenommene und gehaltene Zielobjekt an einem Zwischenort (4), der außerhalb des ersten Orts angeordnet ist, zu setzen, und der zweite Erkennungsprozess die Ausrichtung des an dem Zwischenort (4) angeordneten einen Zielobjekts erkennt und
wobei dann, wenn der zweite Übertragungsvorgang ausgeführt wird, die Steuereinheit (500, 600) die Manipulatoreinheit (10) anweist, das eine an dem Zwischenort (4) angeordnete Zielobjekt aufzunehmen und das eine Zielobjekt an den zweiten Ort zu übertragen.

6. Manipulatorsystem nach einem der Ansprüche 1 bis 4,

wobei die Erkennungseinheit den zweiten Erkennungsprozess ausführt, um die Ausrichtung des einen Zielobjekts zu erkennen, während die Manipulatoreinheit (10) das eine Zielobjekt hält, und dann die Steuereinheit (500, 600) die Manipulatoreinheit (10) anweist, das eine Zielobjekt, das durch die Manipulatoreinheit (10) gehalten wird, unmittelbar an den zweiten Ort zu übertragen.

7. Manipulatorsystem nach einem der Ansprüche 1 bis 6, wobei die Manipulatoreinheit (10) Folgendes enthält:

eine oder mehrere Gelenkverbindungen (11, 12, 14, 15, 17);
ein oder mehrere Bedienungselemente (501 bis 505), um jeweils die eine oder die mehreren Gelenkverbindungen (11, 12, 14, 15, 17) anzusteuern;
einen oder mehrere Arme (13, 16), die jeweils an der einen oder den mehreren Gelenkverbindungen (11, 12, 14, 15, 17) angebracht sind;
einen Halter (20), der an einem des einen oder der mehreren Arme (13, 16) oder einer der einen oder der mehreren Gelenkverbindungen (11, 12, 14, 15, 17) angebracht ist, um das eine Zielobjekt zu halten; und
eine Rotationseinheit (26), um den Halter (20) zu drehen,
wobei die Rotationseinheit (26) den Halter (20), der das eine Zielobjekt hält, dreht, um eine Stellung des einen durch den Halter (20) gehaltenen Zielobjekts so zu ändern, dass die Ausrichtung des einen Zielobjekts mit der gegebenen Ausrichtung eingestellt ist, wenn das eine durch den Halter (20) gehaltene Zielobjekt zu einer Übertragungsposition auf dem zweiten Ort durch Ansteuern der einen oder der mehreren Gelenkverbindungen (11, 12, 14, 15, 17) bewegt wird.

8. Verfahren zum Übertragen eines Zielobjekts von einem ersten Ort zu einem zweiten Ort, das Folgendes umfasst:

Erfassen dreidimensionaler Informationen mehrerer Zielobjekte, die an dem ersten Ort angeordnet sind;
einen ersten Erkennungsprozess des Erkennens des einen Zielobjekts, das von den mehreren Zielobjekten, die an dem ersten Ort angeordnet sind, aufzunehmen ist, anhand der erfassten dreidimensionalen Informationen;
durch Verwenden einer Manipulatoreinheit (10) Aufnehmen des einen Zielobjekts, das in dem Erkennungsschritt erkannt wurde, von den mehreren Zielobjekten, die an dem ersten Ort angeordnet sind, um das eine Zielobjekt zu einer Außenseite des ersten Orts zu bewegen;

einen zweiten Erkennungsprozess des Erkennens einer Ausrichtung des einen Zielobjekts, das in dem Aufnahmeschritt aufgenommen und zu einer Außenseite des ersten Orts bewegt wurde; und
durch Verwenden der Manipulatoreinheit (10), die in dem Aufnahmeschritt verwendet wurde, Übertragen des einen Zielobjekts mit der Ausrichtung, die in dem Erkennungsschritt erkannt wurde, zu dem zweiten Ort durch Einstellen einer gegebenen Ausrichtung für das eine Zielobjekt,
**gekennzeichnet durch**
Aufnehmen eines Referenzbilds durch eine erste Kamera (40A) und Aufnehmen eines Vergleichsbilds durch eine zweite Kamera (40B) der mehreren Zielobjekte, die an dem ersten Ort angeordnet sind, wobei die erste Kamera (40A) und die zweite Kamera (40B) eine Bildaufnahmeeinheit (40) umfassen, wobei die erste Kamera (40A) einen Bildaufnahmebereich besitzt und die zweite Kamera (40B) einen Bildaufnahmebereich besitzt und sich ein Teil des einen Bildaufnahmebereichs der ersten Kamera (40A) und ein Teil des einen Bildaufnahmebereichs der zweiten Kamera (40B) überschneiden und der sich überschneidende Aufnahmebereich als ein primärer Aufnahmebereich verwendet werden kann, um Bilder aufzunehmen, die zum Erzeugen der dreidimensionalen Informationen der mehreren Zielobjekte, die an einem ersten Ort angeordnet sind, zu verwenden sind, und wobei mindestens einer des anderen Teils des einen Bildaufnahmebereichs der ersten Kamera (40A) oder der andere Teil des einen Bildaufnahmebereichs der zweiten Kamera (40B), die nicht als der primäre Aufnahmebereich verwendet werden, als sekundärer Aufnahmebereich verwendet werden kann, um ein Bild aufzunehmen, das zum Erzeugen der zweidimensionalen Informationen des aufgenommenen einen Zielobjekts zu verwenden sind,
wobei die dreidimensionalen Informationen, die in dem ersten Erkennungsprozess zu verwenden sind, Disparitätsinformationen enthalten, die aus dem durch die Bildaufnahmeeinheit (40) aufgenommenen Referenzbild und Vergleichsbild erzeugt werden; und
wobei die zweidimensionalen Informationen, die in dem zweiten Erkennungsprozess zu verwenden sind, Bildhelligkeitsinformationen enthalten, die aus dem einen durch die Bildaufnahmeeinheit (40) aufgenommenen Bild erzeugt werden.

9. Trägermedium, das ein Programm speichert, das dann, wenn es durch einen Computer ausgeführt wird, bewirkt, dass der Computer das Verfahren nach Anspruch 8 ausführt.

## Revendications

1. Système de manipulation comprenant :

une unité de manipulation (10) pour capter un objet cible à partir d'une pluralité d'objets cibles placés sur un premier endroit ;
une unité d'appareil photographique stéréoscopique (40), qui est une unité de capture d'image (40) et peut être utilisée conjointement avec un dispositif de commande de robot (500) en tant qu'unité de reconnaissance (40, 500) pour effectuer un premier processus de reconnaissance et un deuxième processus de reconnaissance, le premier processus de reconnaissance reconnaissant ledit objet cible devant être capté depuis le premier endroit au moyen de l'unité de manipulation (10) en fonction d'informations en trois dimensions de la pluralité d'objets cibles placés sur le premier endroit, et le deuxième processus de reconnaissance reconnaissant une orientation dudit objet cible capté depuis le premier endroit par l'unité de manipulation (10) en fonction d'informations en deux dimensions dudit objet cible capté ; et
un dispositif de commande (500, 600) visant à commander l'unité de manipulation (10) pour effectuer une première opération de transfert en fonction du premier processus de reconnaissance et une deuxième opération de transfert en fonction du deuxième processus de reconnaissance pour ledit objet cible,
lorsque le dispositif de commande (500, 600) effectue la première opération de transfert, le dispositif de commande (600) donnant l'instruction à l'unité de manipulation (10) de capter ledit objet cible reconnu par le premier processus de reconnaissance et de déplacer ladite cible captée vers un côté extérieur du premier endroit,
lorsque le dispositif de commande (500, 600) effectue la deuxième opération de transfert, le dispositif de commande (500, 600) donnant l'instruction à l'unité de manipulation (10) de transférer ledit objet cible, déjà déplacé vers le côté extérieur du premier endroit au moyen de l'unité de manipulation (10), vers un deuxième endroit par définition de l'orientation dudit objet cible avec une orientation déterminée en fonction d'un résultat de reconnaissance du deuxième processus de reconnaissance,
**caractérisé en ce que**
l'unité de capture d'image (40) présente un premier appareil photographique (40A) pour capturer une image de référence et présente un deuxième appareil photographique (40B) pour capturer une image de comparaison de la pluralité d'objets cibles placés sur le premier endroit, moyennant quoi le premier appareil photographique (40A) présente une zone de capture d'image et le deuxième appareil photographique (40B) présente une zone de capture d'image, et une partie de ladite zone de capture d'image du premier appareil photographique (40A) et une partie de ladite zone de capture d'image du deuxième appareil photographique (40B) sont chevauchées, et la zone de capture chevauchée peut être utilisée comme zone de capture primaire pour capturer des images devant être utilisées pour générer les informations en trois dimensions de la pluralité d'objets cibles placés sur un premier endroit et moyennant quoi l'autre partie de la zone de capture d'image du premier appareil photographique (40A) et/ou l'autre partie de la zone de capture d'image du deuxième appareil photographique (40B), non utilisées comme zone de capture primaire, peuvent être utilisées comme une zone de capture secondaire pour capturer une image devant être utilisée pour générer les informations en deux dimensions dudit objet cible capté,
les informations en trois dimensions devant être utilisées dans le premier processus de reconnaissance comprenant des informations de disparité générées à partir de l'image de référence et de l'image de comparaison capturées par l'unité de capture d'image (40), et
les informations en deux dimensions devant être utilisées dans le deuxième processus de reconnaissance comprenant des informations de luminosité d'image générées à partir de ladite image capturée par l'unité de capture d'image (40).

2. Système de manipulation selon la revendication 1, dans lequel l'unité de capture d'image (40) comprend un premier dispositif de capture d'image (40A) présentant une première zone de capture d'image, et un deuxième dispositif de capture d'image (40B) présentant une deuxième zone de capture d'image, le premier dispositif de capture d'image (40A) capturant ladite image dudit objet cible qui est capté par l'unité de manipulation (10) et défini dans une partie de la première zone de capture d'image, ou le deuxième dispositif de capture d'image (40B) capturant ladite image dudit objet cible qui est capté par l'unité de manipulation (10) et défini dans une partie de la deuxième zone de capture d'image,
le dispositif de commande (500, 600) donnant l'instruction à l'unité de manipulation (10) de déplacer et définir ledit objet cible capté par l'unité de manipulation (10) vers un endroit défini dans la partie de la première zone de capture d'image lorsque ladite image dudit objet cible est capturée au moyen de la première capture d'image (40A),

le dispositif de commande (500, 600) donnant l'instruction à l'unité de manipulation (10) de déplacer et définir ledit objet cible capté par l'unité de manipulation (10) vers un endroit défini dans la partie de la deuxième zone de capture d'image lorsque ladite image dudit objet cible est capturée au moyen du deuxième dispositif de capture d'image (40B).

3. Système de manipulation selon la revendication 2, dans lequel l'unité de reconnaissance (40, 500) reconnaît l'orientation dudit objet cible capté par l'unité de manipulation (10) en fonction de ladite image capturée par le premier dispositif de capture d'image (40A) de l'unité de capture d'image (40), ou l'unité de reconnaissance (40, 500) reconnaît l'orientation dudit objet cible capté par l'unité de manipulation (10) en fonction de ladite image capturée par le deuxième dispositif de capture d'image (40B) de l'unité de capture d'image (40).

4. Système de manipulation selon la revendication 1, comprenant en outre :

une unité d'émission de lumière de mesure (50) pour émettre une lumière de mesure vers la pluralité d'objets cibles placés sur le premier endroit,
le dispositif de commande (500, 600) effectuant la première opération de transfert pour déplacer et définir ledit objet cible capté par l'unité de manipulation (10) vers un endroit qui n'est pas irradié par la lumière de mesure émise depuis l'unité d'émission de lumière de mesure (50) pour capturer ladite image utilisée pour le deuxième processus de reconnaissance sans effet de la lumière de mesure émise depuis l'unité d'émission de lumière de mesure (50).

5. Système de manipulation selon l'une quelconque des revendications 1 à 4,
dans lequel lorsque la première opération de transfert est effectuée, le dispositif de commande (500, 600) donne l'instruction à l'unité de manipulation (10) de placer ledit objet cible capté et maintenu par l'unité de manipulation (10) sur un endroit intermédiaire (4) défini à l'extérieur du premier endroit, et le deuxième processus de reconnaissance reconnaît l'orientation dudit objet cible placé sur l'endroit intermédiaire (4), et
lorsque la deuxième opération de transfert est effectuée, le dispositif de commande (500, 600) donne l'instruction à l'unité de manipulation (10) de capter ledit objet cible sur l'endroit intermédiaire (4) et de transférer ledit objet cible vers le deuxième endroit.

6. Système de manipulation selon l'une quelconque des revendications 1 à 4,
dans lequel l'unité de reconnaissance effectue le deuxième processus de reconnaissance pour reconnaître l'orientation dudit objet cible tandis que l'unité de manipulation (10) maintient ledit objet cible, et puis le dispositif de commande (500, 600) donne l'instruction à l'unité de manipulation (10) de transférer ledit objet cible étant maintenu par l'unité de manipulation (10) vers le deuxième endroit directement.

7. Système de manipulation selon l'une quelconque des revendications 1 à 6, dans lequel l'unité de manipulation (10) comprend :

un ou plusieurs joints (11, 12, 14, 15, 17) ;
un ou plusieurs actionneurs (501 à 505) pour entraîner respectivement lesdits un ou plusieurs joints (11, 12, 14, 15, 17) ;
un ou plusieurs bras (13, 16) respectivement attachés auxdits un ou plusieurs joints (11, 12, 14, 15, 17);
un support (20), fixé à un desdits un ou plusieurs bras (13, 16) ou un desdits un ou plusieurs joints (11, 12, 14, 15, 17), pour maintenir ledit objet cible ; et
une unité de rotation (26) pour faire tourner le support (20),
l'unité de rotation (26) faisant tourner le support (20) maintenant ledit objet cible pour changer une position dudit objet cible maintenu par le support (20) de manière que l'orientation dudit objet cible est définie avec l'orientation donnée lorsque ledit objet cible maintenu par le support (20) est déplacé vers une position de transfert sur le deuxième endroit par entraînement desdits un ou plusieurs joints (11, 12, 14, 15, 17).

8. Procédé de transfert d'un objet cible d'un premier endroit vers un deuxième endroit, comprenant :

l'acquisition d'informations en trois dimensions d'une pluralité d'objets cibles placés sur le premier endroit ;
un premier procédé de reconnaissance consistant à reconnaître ledit objet cible devant être capté parmi la pluralité d'objets cibles placés sur le premier endroit en fonction des informations en trois dimensions acquises ;
au moyen d'une unité de manipulation (10), la capture dudit objet cible, reconnu lors de l'étape de reconnaissance, parmi la pluralité d'objets cibles placés sur le premier endroit pour déplacer ledit objet cible à l'extérieur du premier endroit ;
un deuxième procédé de reconnaissance consistant à reconnaître une orientation dudit objet cible capté et déplacé vers l'extérieur du premier endroit dans l'étape de capture ; et
au moyen de l'unité de manipulation (10) utilisée dans l'étape de capture, le transfert dudit objet cible présentant l'orientation reconnue dans l'étape de reconnaissance vers le deuxième endroit par définition d'une orientation donnée pour ledit objet cible,

**caractérisé par**

la capture d'une image de référence par un premier appareil photographique (40A) et la capture d'une image de comparaison par un deuxième appareil photographique (40B), de la pluralité d'objets cibles placés sur le premier endroit, le premier appareil photographique (40A) et le deuxième appareil photographique (40B) comprenant une unité de capture d'image (40), moyennant quoi le premier appareil photographique (40A) présente une zone de capture d'image et le deuxième appareil photographique (40B) présente une zone de capture d'image, et une partie de ladite zone de capture d'image du premier appareil photographique (40A) et une partie de ladite zone de capture d'image du deuxième appareil photographique (40B) sont chevauchées, et la zone de capture chevauchée peut être utilisée comme zone de capture primaire pour capturer des images devant être utilisées pour générer les informations en trois dimensions de la pluralité d'objets cibles placés sur un premier endroit et moyennant quoi l'autre partie de ladite zone de capture d'image du premier appareil photographique (40A) et/ou l'autre partie de ladite zone de capture d'image du deuxième appareil photographique (40B), non utilisées comme zone de capture primaire, peuvent être utilisées comme une zone de capture secondaire pour capturer une image devant être utilisée pour générer les informations en deux dimensions dudit objet cible capté,

les informations en trois dimensions devant être utilisées dans le premier processus de reconnaissance comprenant des informations de disparité générées à partir de l'image de référence et de l'image de comparaison capturées par l'unité de capture d'image (40), et

les informations en deux dimensions devant être utilisées dans le deuxième processus de reconnaissance comprenant des informations de luminosité d'image générées à partir de ladite image capturée par l'unité de capture d'image (40).

**9.** Milieu de support stockant un programme qui, lorsqu'exécuté par un ordinateur, amène l'ordinateur à effectuer le procédé selon la revendication 8.

# FIG. 1

EP 3 173 194 B1

FIG. 2

22

EP 3 173 194 B1

# FIG. 3

23

# FIG. 4

# FIG. 5

# FIG. 6A

# FIG. 6B

# FIG. 7

EP 3 173 194 B1

SYSTEM CONTROLLER — 600

601 CPU

603 ROM

605 RAM

PICKING ROBOT — 100

ROBOT CONTROLLER — 500

501 CPU

503 ROM

505 RAM

506 MEMORY

JOINT ACTIVATOR — 501 TO 505

WORK SUCTION PUMP — 24

WORK HOLDING POSITION ADJUSTER — 25

ROTATION UNIT — 26

PALETTE MOVEMENT MECHANISM — 30

STEREO CAMERA UNIT — 40

PATTERN PROJECTION UNIT — 50

# FIG. 8

# FIG. 9

# FIG. 10

START

**1st TRANSFER OPERATION**

PROJECT PATTERN IMAGE — S1

CAPTURE IMAGE OF PLURALITY OF WORK COMPONENTS PILED ON TRAY BY USING STEREO CAMERA UNIT — S2

ACQUIRE DISPARITY IMAGE INFORMATION BY USING STEREO CAMERA UNIT — S3

CALCULATE PICKUP POSITION OF HAND AND ORIENTATION OF WORK ADSORPTION FACE OF HAND — S4

GENERATE MANUPILATOR-PATH DRIVING PROFILE AND DRIVE MANIPULATOR UNIT — S5

PICKUP WORK COMPONENT FROM WORK-PILED TRAY BY USING MANIPULATOR UNIT — S6

GENERATE MANUPILATOR-PATH DRIVING PROFILE AND DRIVE MANIPULATOR UNIT — S7

RELEASE WORK COMPONENT ON INTERMEDIATE TRAY FROM MANIPULATOR UNIT — S8

**2nd TRANSFER OPERATION**

CAPTURE IMAGE OF WORK COMPONENT PLACED ON INTERMEDIATE TRAY — S9

ACQUIRE IMAGE BRIGHTNESS INFORMATION — S10

CALCULATE RELEASE POSITION AND RELEASE POSTURE OF WORK COMPONENT — S11

GENERATE MANUPILATOR-PATH DRIVING PROFILE AND DRIVE MANIPULATOR UNIT — S12

PICKUP WORK COMPONENT FROM INTERMEDIATE TRAY BY USING MANIPULATOR UNIT — S13

DRIVE HAND ROTATION UNIT — S14

PLACE WORK COMPONENT ON PALETTE — S15

END

# FIG. 11A

W

Wa

Wp Wp Wp Wp Wp Wp Wp

# FIG. 11B

W

Wa

Wp Wp Wp Wp Wp Wp Wp Wp

FIG. 12

# FIG. 13

FIRST CAMERA (REFERENCE CAMERA) 40A

SECOND CAMERA (COMPARISON CAMERA) 40B

Hmax

HEIGHT

Rw

Ra

Rb

# FIG. 14

FIRST CAMERA (REFERENCE CAMERA) 40A

SECOND CAMERA (COMPARISON CAMERA) 40B

Hmax

HEIGHT

Rw

Ra

Rb

# FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP P2014511772A W

- EP 2679353 A1